# EUROPEAN PATENT SPECIFICATION

(11) **EP 3 697 056 B1**
(45) Date of publication and mention of the grant of the patent: **20.08.2025**
(21) Application number: 20157697.2
(22) Date of filing: 17.02.2020
(51) Int. Cl.: H04L 69/22, H04L 9/40, H04L 69/322

(54) **SYSTEM AND METHOD FOR SECURING AN IN-VEHICLE NETWORK**
SYSTEM UND VERFAHREN ZUR SICHERUNG EINES INTERNEN FAHRZEUGNETZES
SYSTÈME ET PROCÉDÉ DE SÉCURISATION D'UN RÉSEAU INTERNE D'UN VÉHICULE

(30) Priority: 18.02.2019 US 201962806916 P
(43) Date of publication of application: 19.08.2020
(73) Proprietor: Argus Cyber Security Ltd, 6789155 Tel Aviv (IL)
(72) Inventor: Geynis, Amit, 65824 Schwalbach a. Ts. (DE); Atad, Matan, 65824 Schwalbach a. Ts. (DE); Ben Noon, Ofer, 65824 Schwalbach a. Ts. (DE)
(74) Representative: Aumovio Corporation

(56) References cited:
- EP-A1- 2 892 199
- EP-A1- 3 373 553
- US-A1- 2008 229 415

## Description

### FIELD OF THE INVENTION

The present invention relates generally to securing an in-vehicle network.

### BACKGROUND OF THE INVENTION

A malicious entity can inject network packets into a network. Current systems and methods often verify packets, portions or fragments of a session at layers five and above of the Open System Interconnection (OSI) model (collectively referred to herein as L7), accordingly, a hacker that gains access to a network can inject messages that will be treated, by a receiving node or application, as valid packets that belong to a session and thus jeopardize security. For example, systems and methods (e.g., designed according to the AUTOSAR SOME/IP protocol) that do not verify messages based on data in layer 4 and/or lower layers are vulnerable to packet spoofing, message injection, unauthorized access to a network and various other malicious activities.

EP 3 373 553 A1 generally relates to protecting an in-vehicle network. In particular, it enables protecting an in-vehicle network from cyber-attacks.

EP 2 892 199 A1 relates to providing cyber security for in-vehicle communication networks.

US 2008/0229415 A1 is about computer security and protection. Specifically, it is about protecting computer systems from viruses, attacks from hackers and other unauthorized intrusions, spyware, spam, phishing and other scams, malicious activities and code.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 shows a system according to illustrative embodiments of the present invention;
Fig. 3 shows a flow and a data structure according to illustrative embodiments of the present invention; and
Fig. 4 shows a system and flow according to illustrative embodiments of the present invention.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

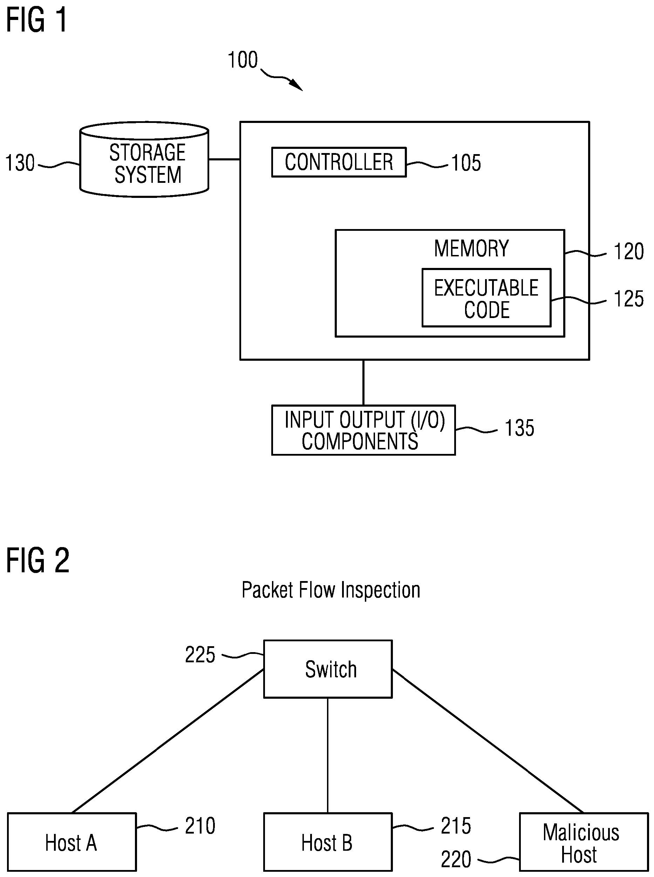

Reference is made to Fig. 1, showing a non-limiting, block diagram of a computing device or system 100 that may be used by, or included in, a system according to some embodiments of the present invention. Computing device (or system) 100 may include a controller 105 that may a hardware controller. For example, computer hardware processor or hardware controller 105 may be, or may include, a central processing unit processor (CPU), a chip or any suitable computing or computational device. Computing system 100 may include a memory 120, executable code 125, a storage system 130 and input/output (I/O) components 135. Controller 105 (or one or more controllers or processors, possibly across multiple units or devices) may be configured (e.g., by executing software or code) to carry out methods described herein, and/or to execute or act as the various modules, units, etc., for example by executing software or by using dedicated circuitry. More than one computing devices 100 may be included in, and one or more computing devices 100 may be, or act as the components of, a system according to some embodiments of the invention.

Memory 120 may be a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different memory units. Memory 120 may be a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 may be software, an application, a program, a process, task or script. A program, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein.

Executable code 125 may be executed by controller 105 possibly under control of an operating system. For example, executable code 125 may be an application, e.g., in a server, that generates or creates software update objects and/or executable code 125 may be an application, e.g., in a device being updated, that uses software update objects to update software or firmware objects to update a device as further described herein. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein. For example, servers, devices, units or modules described herein, may be, or may include, controller 105, memory 120 and executable code 125. Computing systems discussed herein such as servers or devices being updated may include components such as in Fig. 1.

Storage system 130 may be or may include, for example, a hard disk drive, a universal serial bus (USB) device, a flash memory or unit or any other suitable removable and/or fixed storage unit. In some embodiments, some of the components shown in Fig. 1 may be omitted. For example, storage system 130 may be a non-volatile memory (e.g., a flash memory) included in memory 120 may be. Accordingly, although shown as a separate component, storage system 130 may be embedded or included in system 100, e.g., in memory 120.

I/O components 135 may be, may be used for connecting (e.g., via included ports) or they may include: a mouse; a keyboard; a touch screen or pad or any suitable input device. I/O components may include one or more screens, touchscreens, displays or monitors, speakers and/or any other suitable output devices. Any applicable I/O components may be connected to computing device 100 as shown by I/O components 135, for example, a wired or wireless network interface card (NIC), a universal serial bus (USB) device or an external hard drive may be included in I/O components 135.

A system according to some embodiments of the invention may include components such as, but not limited to, a plurality of central processing units (CPU) or any other suitable multipurpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units (e.g., memory 120 may include a flash memory and a RAM), and a plurality of storage units. A system may additionally include other suitable hardware components and/or software components. In some embodiments, a system may include or may be, for example, a server computer, a network device and any number of target or remote devices, e.g., internet of things (IoT) devices, electronic control units (ECUs) in a vehicle, e.g., ECUs included in a car, a boat or an airplane.

As described, embodiments of the invention provide authentication and verification of packets, fragments, messages or any other portions of data communicated over a session. For the sake of simplicity, the term "message" will be used herein to refer to packets, fragments, or any other data portion communicated over, or in, a session, the terms packet, fragment and message as used herein may mean, or may relate to, the same thing and may be used interchangeably herein. A session may be, for example, as defined by the AUTOSAR SOME/IP protocol or a session may be a TCP connection or any session as defined by any relevant layer 7 protocol.

### Authentication per fragment

In many communication systems, when a packet is too large to be sent as a single frame or message, the packet is fragmented into multiple frames. For example, in AUTOSAR's SOME/IP protocol, the SOME/IP-TP module fragments SOME/IP packets so that they fit into a MTU (maximum transmission unit) of a lower layer.

However, the AUTOSAR SOME/IP protocol does not separately authenticate each fragment when received by the destination or receiving node, accordingly, a hacker can inject AUTOSAR SOME/IP fragments to a network and these injected fragments may be processed, by a receiver, as valid fragments of the session.

Some embodiments authenticate each of the fragments produced as described above, e.g. using MAC (message authentication code) or encryption or any cryptographic mechanism in one of the communication layers (e.g., any one of the Ethernet, IP, UDP, TCP and application layers). For example, each SOME/IP-TP fragment may be encrypted and may be authenticated based on a successful decryption. In other cases, a fragment authentication code (e.g., hash value) may be calculated by a sender and used, by a receiver, to authenticate the content of the fragment. By authenticating each fragment as described, embodiments of the invention overcome a vulnerability of current systems that may authenticate complete packets or messages but do not separately authenticate each fragment of messages.

An embodiment of the invention may authenticate each fragment, e.g., each and every fragment of each SOME/IP packet in a session or flow may be authenticated as described, thus, by applying a per-fragment authentication, embodiments of the invention may completely or fully secure a session. Of course, authentication of a set of fragments as a whole, e.g., a buffer or a reconstructed packet may be authenticated as described.

Authenticating a fragment may be based on data in one or more layers, e.g., authentication may be based on data of, or related to, the physical layer (L1, e.g., port of a switch), data layer (L2, Ethernet MAC address), network layer (L3, e.g., IP address) and transport layer (L4, e.g., TCP port). Authentication may include any techniques, for example, a message authentication code and/or any encryption or cryptographic technique applied to content of a fragment, in one or more of the communication layers may be used so that each fragment in a session is authenticated and, consequently, the session is authenticated as a whole.

Generally, in a typical communication system, each packet or message sent over a network is associated with multiple layers' parameters, identifiers or values (collectively referred to herein as network identifiers). For example, in an Ethernet network, network identifiers of each message communicated over a network may be: a source/destination MAC addresses; a Vlan id; a source/destination IP addresses; a UDP port number and an application or service identifier (e.g., AUTOSAR PDU ID or any other application (or service) identifier). It will be noted that network identifiers of any network infrastructure or protocol may be used. Network identifiers may be used by an embodiment to provide per-packet access control as further described.

To provide per-packet access control, an embodiment may match an application identifier with a set of network identifiers, e.g. using a list, table or other construct that associates a set of network identifiers with at least one application identifier, parameter or value.

The matching of a set of network identifiers with an application identifier may be done on a per-packet basis. For example, an Autosar session with a specific PDU ID value may be associated, in a list or table as described below, with one or more network identifiers, e.g., a source MAC address, a Vlan id, a source IP addresses and a UDP port number. Each packet or message received over the session may be checked to see whether or not the set of its network identifiers as received matches the PDU ID in the list, if no match is found, the packet may be considered invalid.

Accordingly, each packet in a session (e.g., a session identified by the PDU ID value) may be authenticated separately. If, when processing a received message, a match as described cannot be found, an embodiment may determine the packet is related to an anomaly or other security threat and the embodiment may perform one or more actions, e.g., if no match is found, a packet may be logged, discarded or sent for evaluation, an alarm may be triggered and so on.

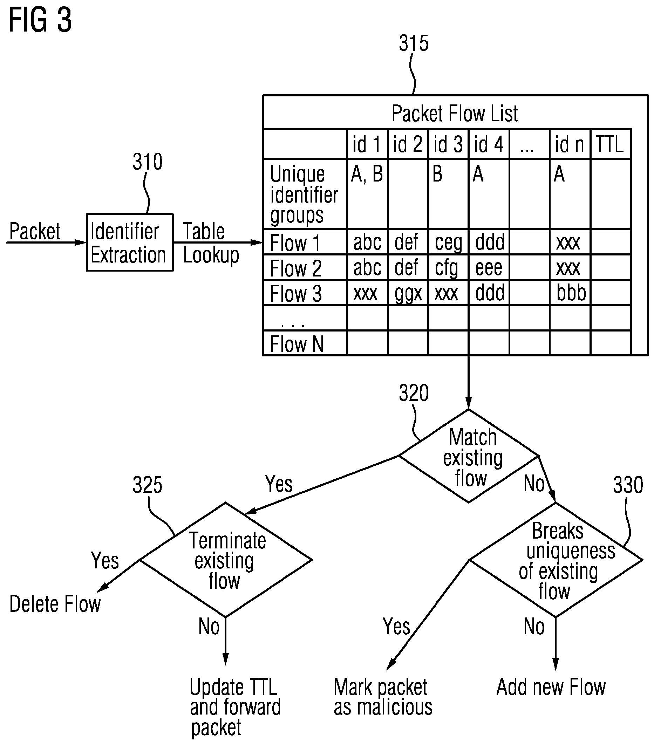

It will be noted that an embodiment of the invention may be, or may be included in, any entity in a network, e.g., the operations described herein may be performed by a switch or an end or edge node in a network. For example, a table as shown in Fig. 3 may be stored in a memory of a switch and/or a memory of an ECU in a vehicle. In some embodiments, a switch or other node may add data to a packet or message before forwarding the message, e.g., a hash value or other information usable for authentication may be added to an original message and used, e.g., by a receiver, to authenticate the message. Adding information to messages may be done on a per-message or per-packet basis, accordingly, each message or packet may be independently authenticated.

Reference is made to Fig. 2 showing a system according to some embodiments. As shown, host A 210 and host B 215 may be nodes on a network (e.g., ECUs) and the malicious host 220 may be a compromised ECU, e.g., a hacker gained control over malicious host 220. As further shown, hosts 210, 215 and 220 communicate via switch 225.

Reference is additionally made to Fig. 3, a flow and a data structure according to illustrative embodiments of the present invention. As shown, a packet flow list 315 may be maintained, e.g., by switch 225. An identifier unit 310 may authenticate (or identify as invalid) each incoming packet by matching network identifiers of the incoming packet with an identifier in list or table 315. As shown by block 320, for each incoming message, an embodiment may extract, from the message, a network identifier designated as a flow identification value (e.g., a PDU ID or any other L7 identifier) and determine whether or not the flow identification value is in list 315.

As shown by block 330, if the flow identification value is not found in list 315 yet its value is verified as legitimate or authentic, a new entry may be included in list 315. For example, only a set of predefined, unique flow identification values may be used in a system, thus legitimacy of a flow identification value can be determined.

As further shown by block 330, if the flow identification value is invalid, the message may be marked as malicious and an action may be performed as described. Any logic may be used for determining whether a new flow identification value is authentic (and will be added to list 315) or is suspicious or invalid. When adding a new flow to list 315, a set of identifiers (as shown by column headers "id 1", "id 2" and so on) may be added, e.g., a MAC address and UDP port number may be added in the line of the new flow such that subsequent fragments with that flow identifier can be authenticated.

As shown by block 325, if a match is found for a flow of a received message then an embodiment may check if the flow has been terminated, if so, the flow may be deleted from list 315, if the flow is valid and not yet terminated, a time to live (TTL) value may be updated in list 315 and the message may be forwarded to its destination, or accepted if the operations described herein are performed by a node that is the destination of the message.

Typically, a network includes or connects multiple hosts connected through network switches that can be virtual switches or physical switches. A major threat for security of the network is the ability of a malicious host (e.g., host 220) to inject packets into an existing packet flow between two other hosts (e.g., between hosts 210 and 215) in the network. A packet flow may be a subset of a communication session (e.g., some of the packets included in the session) going through a switch (e.g., switch 225), a session may be used by two hosts for the purpose of communication in a specific use-case.

In some embodiments, a switch (e.g., switch 225) or one of the network hosts (e.g., one of hosts 210 and 215) monitors packet flows between hosts in the network. Authenticating or validating packets as describe may be based on information that is collected dynamically, in runtime, and/or authenticating or validating packets may be based on static or preconfigured configuration data. For example, data in list 315 may be predefined (e.g., if MAC addresses, session IDs and UDP ports are known in advance, entries in list 315 may be predefined). Additionally, and/or alternatively, entries may be added and/or removed to/from list 315 dynamically, e.g., when new flows or sessions are identified or when a flow terminates as described herein.

Once a flow was established between two hosts, a switch may maintain a tuple of flow identifiers, which may include various identifiers from all layer of communication. The terms "flow identifier" and "network identifier" as referred to herein may mean the same thing and may be used interchangeably herein.

For example, each row in list 315 may be a tuple. For example, "id 1" in list 315 may be an L1 value (for example the switch ports), "id 2" may be VLAN identification value, "id 3" may be an L2 MAC address, "id 4" may be an L3 value (IP addresses), "id 5" may be an L4 value (UDP/TCP ports) and the unique identifier groups in list 315 may be application level identifiers (e.g., SOME/IP service id, instance id etc.).

Some of the combinations of flow identifiers may be regarded as unique, meaning there could be no two flows with the exact or substantially same (possibly with tolerance) combination of flow identifiers. For example: there could be no two flows with the combination of exact or substantially same (possibly with some tolerance) L4 port, SOME/IP service instance and VLAN id. Several of these unique combinations may be predefined and/or preconfigured in a system, e.g., at production time.

When a packet arrives at a node (e.g., switch 225 or one of hosts 210 and 215), the node may first try to assign or associate the packet with an existing flow, e.g., by extracting network or flow identifiers from the packet and matching them with an entry in list 315. For example, switch 225 extracts, from a received packet, a MAC address, SOME/IP service id and UDP port and searches list 325 for an entry with a matching combination of MAC address, SOME/IP service id and UDP port. If a match is found the switch may operate as described with reference to Fig. 3, e.g., update a TTL and forward the packet.

If no match is found, meaning the received packet does not belong to an existing or known flow, and, in addition, the packet doesn't include a combination of unique flow identifiers which are already taken by existing flows, an entry representing a new flow may be created in list 315. If flow identifiers of a packet only partially match identifiers in an entry in list 315, e.g., the SOME/IP service id matches but the UDP port doesn't, an embodiment may determine the message or packet is malicious or otherwise related to an anomaly. Accordingly, embodiments of the invention enable verifying integrity of a flow, e.g., by identifying messages maliciously injected into a flow.

A flow table (e.g., table or list 315) may include a Flow TTL value, that may be incremented for every matching packet. Flows (or entries representing flows) may be removed from the table based on one or more events or conditions. For example, a flow may be removed from list 315 when the flow's TTL expires. For example, a flow may "live" for 5 seconds after a last packet or fragment is received, accordingly, if no flow packets are received for more than 5 seconds, the flow may be removed from the list. In another case, a flow may be removed from list 315 if one of a set of predefined network events matching the flow has occurred, for example, the L4 connection was reset, application level termination message was received (e.g., SOME/IP-SD unsubscribe message) etc.

In some embodiments, a system includes a switch or a plurality of interconnected switches that connect a plurality of nodes to a network. Routes, paths (or network hops) of messages communicated over the network are recorded, encoded or included in communicated messages such that messages can be authenticated, verified or validated based on the route they traverse from a source node to a destination node.

Legitimate routes may be predefined and/or preconfigured, for example, when routes are known in advance, e.g., at production time. Legitimate routes may be dynamically identified, learned and recorded, e.g., during a learning phase or time.

Any part or portion of a message may be used for recording route information. Part or portion of any network layer may be used for recording a source and path of a message, for example, some of the bits in the vendor-specific unique identifier field in a MAC address may be used, part of a Vlan or MPLS tag, padding bits in the IP header may be used and so on.

Although Ethernet and TCP/IP are mainly discussed below it will be understood that any network infrastructure or protocol may be applicable.

Some in-vehicle networks are made of multiple L2 Ethernet switches connected to hosts. The hosts connect to the switches using ports and unique MAC addresses that only change following a replacement of equipment under service (e.g., replacement of a host or node). Switches have physical access ports connected to hosts and physical trunk ports connected to other switches. Typically, switches forward packets (from port to port) based on mac-lookup tables that match between, or associate, destination MAC addresses and physical ports. These tables are predefined or populated dynamically, e.g., using the ARP protocol.

In current systems, when messages are injected to the network by an adversary, and in the absence of additional security control, the adversary can spoof fields of a packet, e.g., by falsely setting, in a packet it sends to the switch, a MAC address, an IP address, an L4 port number and/or an application identifier, however, the adversary cannot change (or modify a value representing) the physical port through which it is connected to a switch (or to a system of multiple, interconnected switches).

An access port, through which a host is connected to a network, may be used by some embodiments to identify a source host and the route taken by a received message. A method according to some embodiments may enable a host that receives a packet to verify the physical port and path or route from/via the packet arrived. Such method can prevent, for example, packet injection and spoofing.

For example, in an embodiment, every switch in the network is assigned, or configured with, a switch-id value (e.g., in the range of 0-11) wherein a switch-id is unique within a network. Further, each switch port is assigned a port-id value (e.g., in the range of 0-15) wherein a port-id value is unique within a given switch. Accordingly, a port/switch combination may be unique within a system.

In some embodiments, prior to forwarding a message, the switch records, in any field of any network layer of the message, the routing information, e.g., the port from which the message was received and/or an identification of the switch. The recording of route information is performed by any node traversed by the message, through the network, from source to destination.

In a non-limiting example described below, fields or bits in a MAC address are used for recording a source and route or path of a message. For example, when forwarding a message received from a port, a switch records the port number in the MAC address of the forwarded message. A switch identification may be similarly recorded.

On the receiving side, the recorded routing information in a received message is examined and used for verifying the message. For example, an ECU may be configured to only process messages arriving from specific MAC addresses, e.g., ones that include specific routing information as described. For example, if a host is to only communicate with nodes connected to ports 1 and 2 of a switch, an adversary connected to port 3 of the switch cannot communicate with the host since the routing information in messages received from the adversary will not include routing information in a list or table on the host (that may identify them as anomalous).

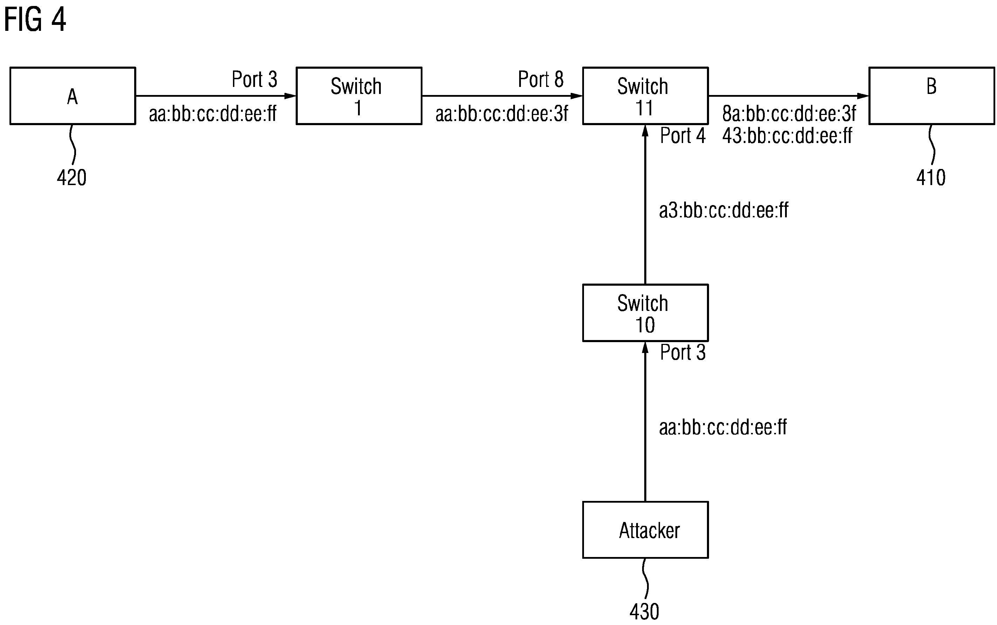

Reference is made to Fig. 4 that illustrates source port and/or route based authentication. For example, host 410 may be configured to only receive packets from host 420, that is, a table in host 410 includes the MAC address of 8a:bb:cc:dd:ee:3f indicating that valid or legitimate messages must come from port 3 of switch 1 and through port 8 of switch 11. Continuing with the current example, if, as shown, a message with MAC address of 43:bb:cc:dd:ee:ff (describing the route from host 430) is received by host 410, host 410 may identify the message as malicious or anomalous. Accordingly, an attacker who gained control of host 430 may not be able to communicate with, or risk host 410.

Information used for source-based and/or route-based authentication as described herein may be predefined or preconfigured, e.g., if routes are known then list 315 with allowed MAC addresses may be included in ECUs or other hosts at production time. Information used for source-based and/or route-based authentication as described herein may be dynamically and automatically generated and stored, e.g., during a learning phase.

Of course, combinations of methods and techniques described herein may be used. For example, tuples in list 315 may include routing information such that, for example, flow integrity as described herein may include, or be augmented by, routing based authentication as described herein.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention, which is defined by the appended claims.

## Claims

1. A method for securing an in-vehicle network, the method performed by a node in the in-vehicle network, comprising:
maintaining a session list, wherein each entry in the session list is associated with a flow and includes a set of network identifiers and an application identifier;
receiving a packet from the in-vehicle network;
identifying (310) two or more network identifiers of the packet;
identifying (310) one or more application identifiers of the packet;
matching the identified two or more network identifiers and the identified one or more application identifiers with an entry in the session list; and
if:
the one or more application identifiers of the packet match the application identifier in the entry, and the at least two or more network identifiers of the packet only partially match the network identifiers in the entry,
then:
determining (330) the packet is related to an anomaly, and
logging information related to the packet.

2. The method of claim 1, comprising dropping the packet.

3. The method of claim 1, wherein the set of network identifiers includes identifiers related to multiple network layers.

4. The method of claim 1, wherein the set of network identifiers includes at least one of: a media access control, MAC, address, a virtual lan, VLAN, identification, an internet protocol , IP, address, a user datagram protocol, UDP, port number, a transmission control protocol, TCP, port number.

5. The method of claim 1, wherein the set of network identifiers includes an identification of a hardware component.

6. The method of claim 1, wherein the one or more application identifiers include a service identifier.

7. The method of claim 1, wherein the one or more application identifiers include a PDU ID.

8. The method of claim 1, wherein the session list is dynamically and automatically created or updated.

9. The method of claim 8, wherein the session list is a preconfigured list.

10. The method of claim 8, comprising removing an entry from the session list based on at least one of:
a time lapse since reception of the last packet is greater than a threshold; and
an event.

11. The method of claim 8, wherein an entry is added to the session list upon identification of a new session.

12. The method of claim 8, comprising identifying, in the session list, a session the packet belongs to based on matching the identified two or more network identifiers and the identified one or more application identifiers with the entry in the session list.

13. The method of claim 1 wherein the logged information is uploaded to a hub for further processing.

14. The method of claim 13, wherein the hub is configured to monitor data uploaded from plurality of networks.

15. A system comprising:
a memory (120) including executable code (125), the executable code adapted to cause a controller (105) to perform the method of one of claims 1-14 when the executable code is executed by the controller.

## Patentansprüche

1. Verfahren zum Sichern eines fahrzeuginternen Netzwerks, wobei das Verfahren durch einen Knoten in dem fahrzeuginternen Netzwerk durchgeführt wird, das Folgendes aufweist:
Verwalten einer Sitzungsliste, wobei jeder Eintrag in der Sitzungsliste mit einem Fluss assoziiert ist und einen Satz von Netzwerkkennungen und eine Anwendungskennung beinhaltet;
Empfangen eines Pakets von dem fahrzeuginternen Netzwerk;
Identifizieren (310) von zwei oder mehr Netzwerkkennungen des Pakets;
Identifizieren (310) einer oder mehrerer Anwendungskennungen des Pakets;
Abgleichen der identifizierten zwei oder mehr Netzwerkkennungen und der identifizierten einen oder mehreren Anwendungskennungen mit einem Eintrag in der Sitzungsliste; und
wenn:
die eine oder die mehreren Anwendungskennungen des Pakets mit der Anwendungskennung in dem Eintrag übereinstimmen und die mindestens zwei oder mehr Netzwerkkennungen des Pakets nur teilweise mit den Netzwerkkennungen in dem Eintrag übereinstimmen,
dann:
Bestimmen (330), dass sich das Paket auf eine Anomalie bezieht, und
Protokollieren von Informationen in Bezug auf das Paket.

2. Verfahren nach Anspruch 1, das ein Fallenlassen des Pakets aufweist.

3. Verfahren nach Anspruch 1, wobei der Satz von Netzwerkkennungen Kennungen beinhaltet, die sich auf mehrere Netzwerkschichten beziehen.

4. Verfahren nach Anspruch 1, wobei der Satz von Netzwerkkennungen mindestens eines von Folgendem beinhaltet: eine Medienzugriffssteuerungs-, MAC-, Adresse, eine virtuelle Lan-, VLAN-, Identifikation, eine Internetprotokoll-, IP-, Adresse, eine Benutzerdatagrammprotokoll-, UDP-, Portnummer, eine Übertragungssteuerprotokoll-, TCP-, Portnummer.

5. Verfahren nach Anspruch 1, wobei der Satz von Netzwerkkennungen eine Identifikation einer Hardwarekomponente beinhaltet.

6. Verfahren nach Anspruch 1, wobei die eine oder die mehreren Anwendungskennungen eine Dienstkennung beinhalten.

7. Verfahren nach Anspruch 1, wobei der eine oder die mehreren Anwendungskennungen eine PDU-ID beinhalten.

8. Verfahren nach Anspruch 1, wobei die Sitzungsliste dynamisch und automatisch erstellt oder aktualisiert wird.

9. Verfahren nach Anspruch 8, wobei die Sitzungsliste eine vorkonfigurierte Liste ist.

10. Verfahren nach Anspruch 8, das Entfernen eines Eintrags aus der Sitzungsliste basierend auf mindestens einem von Folgendem aufweist:
eine Zeitspanne seit dem Empfang des letzten Pakets ist größer als ein Schwellenwert; und
ein Ereignis.

11. Verfahren nach Anspruch 8, wobei ein Eintrag bei Identifizierung einer neuen Sitzung zu der Sitzungsliste hinzugefügt wird.

12. Verfahren nach Anspruch 8, das das Identifizieren, in der Sitzungsliste, eine Sitzung, zu der das Paket gehört, basierend auf dem Abgleichen der identifizierten zwei oder mehr Netzwerkkennungen und die identifizierten einen oder mehreren Anwendungskennungen mit dem Eintrag in der Sitzungsliste aufweist.

13. Verfahren nach Anspruch 1, wobei die protokollierten Informationen zu einem Hub zur weiteren Verarbeitung hochgeladen werden.

14. Verfahren nach Anspruch 13, wobei der Hub dazu ausgelegt ist, Daten zu überwachen, die von mehreren Netzwerken hochgeladen werden.

15. System, das Folgendes aufweist:
einen Speicher (120), der ausführbaren Code (125) beinhaltet, wobei der ausführbare Code angeglichen ist, eine Steuerung (105) zu veranlassen, das Verfahren nach einem der Ansprüche 1-14 durchzuführen, wenn der ausführbare Code durch die Steuerung ausgeführt wird.

## Revendications

1. Procédé de sécurisation d'un réseau interne d'un véhicule, le procédé étant réalisé par un nœud dans le réseau interne du véhicule, comprenant :
le maintien d'une liste de session, dans lequel chaque entrée de la liste de session est associée à un flux et inclut un ensemble d'identifiants de réseau et un identifiant d'application ;
la réception d'un paquet en provenance du réseau interne du véhicule ;
l'identification (310) de deux ou plusieurs identifiants de réseau du paquet ;
l'identification (310) d'un ou plusieurs identifiants d'application du paquet ;
la mise en correspondance des deux ou plusieurs identifiants de réseau identifiés et des un ou plusieurs identifiants d'application identifiés avec une entrée de la liste de session ; et
si :
les un ou plusieurs identifiants d'application du paquet correspondent à l'identifiant d'application dans l'entrée, et les au moins deux ou plusieurs identifiants de réseau du paquet correspondent seulement partiellement aux identifiants de réseau dans l'entrée,
alors :
la détermination (330) du paquet est associée à une anomalie, et
l'enregistrement d'informations associées au paquet.

2. Procédé selon la revendication 1, comprenant le rejet du paquet.

3. Procédé selon la revendication 1, dans lequel l'ensemble d'identifiants de réseau inclut des identifiants associés à plusieurs couches de réseau.

4. Procédé selon la revendication 1, dans lequel l'ensemble d'identifiants de réseau inclut au moins l'un de : une adresse de contrôle d'accès au support, MAC, une identification de LAN virtuel, VLAN, une adresse de protocole Internet, IP, un numéro de port de protocole de datagramme utilisateur, UDP, un numéro de port de protocole de contrôle de transmission, TCP.

5. Procédé selon la revendication 1, dans lequel l'ensemble d'identifiants de réseau inclut une identification d'un composant matériel.

6. Procédé selon la revendication 1, dans lequel les un ou plusieurs identifiants d'application incluent un identifiant de service.

7. Procédé selon la revendication 1, dans lequel les un ou plusieurs identifiants d'application incluent un ID de PDU.

8. Procédé selon la revendication 1, dans lequel la liste de session est créée ou mise à jour dynamiquement ou automatiquement.

9. Procédé selon la revendication 8, dans lequel la liste de session est une liste préconfigurée.

10. Procédé selon la revendication 8, comprenant la suppression d'une entrée de la liste de session sur la base d'au moins l'une de :
un intervalle de temps depuis la réception du dernier paquet est supérieur à un seuil ; et
un événement.

11. Procédé selon la revendication 8, dans lequel une entrée est ajoutée à la liste de session après l'identification d'une nouvelle session.

12. Procédé selon la revendication 8, comprenant l'identification, dans la liste de session, d'une session à laquelle le paquet appartient sur la base de la mise en correspondance des deux ou plusieurs identifiants de réseau identifiés et des un ou plusieurs identifiants d'application identifiés avec l'entrée dans la liste de session.

13. Procédé selon la revendication 1, dans lequel les informations enregistrées sont téléversées sur un concentrateur pour un traitement ultérieur.

14. Procédé selon la revendication 13, dans lequel le concentrateur est configuré pour surveiller des données téléversées à partir d'une pluralité de réseaux.

15. Système, comprenant :
une mémoire (120) incluant du code exécutable (125), le code exécutable étant adapté pour amener un dispositif de commande (105) à réaliser le procédé selon l'une des revendications 1 à 14 lorsque le code exécutable est exécuté par le dispositif de commande.
